# EUROPEAN PATENT APPLICATION

(11) **EP 2 436 921 A1**
(43) Date of publication of application: **04.04.2012**
(21) Application number: 11075159.1
(22) Date of filing: 05.07.2011
(51) Int. Cl.: F03D 7/04

(54) **Method and apparatus for avoiding unnecessary yaw control based on wind condition and method and system for tracking wind**

(30) Priority: 30.09.2010 CN 201010500506
(71) Applicant: Sinovel Wind Group Co., Ltd, Haidian District, Beijing 100872 (CN)
(72) Inventor: Wang, Jianyong, Beijing 100872 (CN); Li, Songqiang, Beijing 100872 (CN); Yang, Song, Beijing 100872 (CN); Su, Liying, Beijing 100872 (CN)
(74) Representative: Pfenning, Meinig & Partner GbR

(57) **Abstract**

The present invention relates to a method and apparatus for judging an unnecessary windward condition and a method and system for tracking wind, wherein the method comprises: Step 1: taking a first wind sample by using a wind sampling-detecting unit, detecting a wind direction of the first wind sample, and obtaining a first wind direction; Step 2: judging whether an intersection angle between the first wind direction and a current wind turbine orientation obtained by a wind turbine orientation device is smaller than a critical angle of rotation by using a control unit; Step 3: if the judging result of Step 2 is "yes", carrying out Step 3-1; if the judging result of Step 2 is "no", carrying out Step 3-2; Step 3-1: determining the windward condition is unnecessary windward condition; Step 3-2: detecting a wind speed of the first wind sample, judging whether the wind speed of the first wind sample is lower than a first critical wind speed; if the answer is "yes", determining the windward condition is unnecessary windward condition; if the answer is "no", determining the windward condition is not unnecessary windward condition, then rotating the cabin of the wind power generating set, thereby achieving accurate windward according to a wind condition, a cabin position, and so on. With the technical solutions of the present invention, whether the change of the wind direction is an unnecessary windward condition can be judged and under the wind direction is an unnecessary windward condition, the system can enable the cabin to be windward under an optimum wind condition and capture maximum wind energy.

## Description

### FIELD OF THE INVENTION

The present invention relates to wind power generation field, in particular to a method and apparatus for judging an unnecessary windward condition and a method and system for tracking wind.

### BACKGROUND

Currently, it is a common view in the world that clean energy should be developed aggressively and a low carbon society should be established in great effort. The wind power has great prospect as a renewable, pollution-free and huge energy.

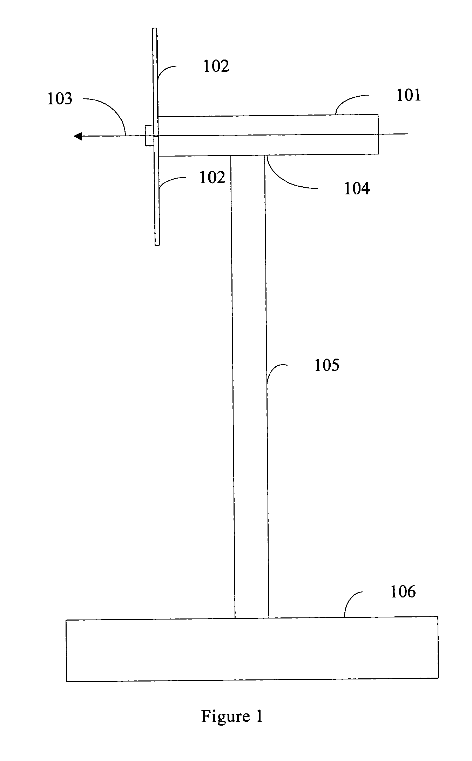

A wind power generating set is a technical equipment of wind power generation. Figure 1 is a structure diagram of a wind generating set. In Figure 1, the wind generating set comprises a cabin 101, blades 102, an upright column 105 and a base 106, wherein there are a plurality of the blades, which can increase the contact area with wind, thereby increasing power generating efficiency. An electric generator is positioned in the interior of the cabin 101. The upright column 105 and the base 106 support the cabin 101. A yaw bearing 104 positioned at the junction of the cabin 101 and the upright column 105 can enable the cabin 101 to move in the horizontal direction. The power generating principle of the wind generating set is: the blades 102 are driven to rotate by wind force, and then the electric generator in the interior of the cabin 101 is driven to work, thereby generating electric power.

In Figure 1, an orientation 103 of a wind turbine is a direction 103 along the axis of cabin 101 from the back of the cabin 101 to the blades 102. The intersection angle between the orientation 103 of the wind turbine and wind direction is one of the decisive factors influencing the wind energy utilization efficiency of the wind generating set. When the intersection angle between the two is 180 degree, the blades 102 can be driven to rotate by the wind force to the greatest extent, thereby enabling the wind energy utilization efficiency of the wind generating set to be the highest.

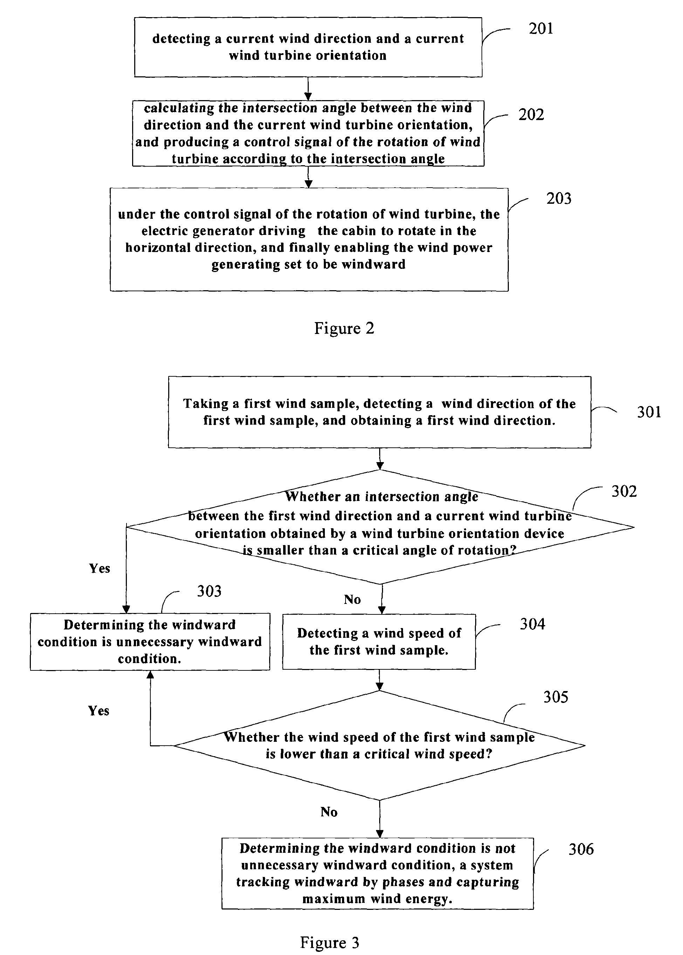

Wind is the resource on which the wind power generation relies. Wind is a product of the nature. Wind direction has very high randomness and always continuously changes with time. Therefore, the orientation 103 of the wind turbine must be continuously changed to adapt to the changes of wind direction, so that the wind energy can be utilized to the greatest extent. In the prior art, in order for the wind turbine to perform better and to enhance the wind energy utilization efficiency of the wind power generating set, a wind-tracking device is specially designed for tracking the wind direction of the position at which the wind power generating set is located, so that the orientation 103 of the wind turbine is rotated with the fastest speed to the direction angled 180 degree to the wind direction. Figure 2 is a flow diagram of a prior method for tracking wind. In Figure 2, the flow diagram comprises:

Step 201: detecting a current wind direction and a current wind turbine orientation;

Step 202: calculating the intersection angle between the wind direction and the current wind turbine orientation, and producing a control signal of the rotation of wind turbine according to the intersection angle;

Step 203: under the control of the rotation control signal of the wind turbine, the electric generator driving the cabin to rotate in the horizontal direction, therefore, achieving the objective of enabling the wind generating set to be windward and utilizing the wind energy to the greatest extent.

In the prior art, when the wind direction changes, the system can calculate the intersection angle between the current wind direction and the current wind turbine orientation and then produce a rotation control signal of the wind turbine controlling the cabin rotating in the horizontal direction. Therefore, if the unnecessary windward condition occurs, i.e. the change of the wind direction is very small, or the wind speed is very low after the wind direction changes, the system still controls the rotation of the cabin, which not only can not increase the wind energy utilization efficiency of the wind generating set but also waste the electric power because of driving the cabin to rotate. Therefore, the loss outweighs the gain.

### SUMMARY

The technical problem needed to be solved in the present invention is to provide a method and apparatus for judging an unnecessary windward condition and a method and system for tracking wind, which can judge whether the change of the wind direction is an unnecessary windward condition or not.

The technical solution of the present invention that solves the technical problem described above is as follows:

A method for judging an unnecessary windward condition comprises:

Step 1: taking a first wind sample, detecting a wind direction of the first wind sample and obtaining a first wind direction;

Step 2: judging whether an intersection angle between the first wind direction and a current wind turbine orientation is smaller than a critical angle of rotation;

Step 3: if the judging result of Step 2 is "yes", carrying out Step 3-1, if the judging result of Step 2 is "no", carrying out Step 3-2;

Step 3-1: determining the windward condition is unnecessary windward condition;

Step 3-2: detecting a wind speed of the first wind sample, judging whether the wind speed of the first wind sample is lower than a first critical wind speed; if the answer is "yes", determining the windward condition is unnecessary windward condition; if the answer is "no", determining the windward condition is not unnecessary windward condition, then rotating the cabin of the wind power generating set, thereby achieving accurate windward according to a wind condition, a cabin position, and so on.

In addition, the present invention also provides an apparatus for judging an unnecessary windward condition, the apparatus comprises a wind sampling-detecting unit, a wind turbine orientation detecting device and a control unit, wherein:

The wind sampling-detecting unit is used for taking a first wind sample, detecting a wind direction of the first wind sample, obtaining a first wind direction, and sending the first wind direction to the control unit; detecting a wind speed of the first wind sample and sending the wind speed of the first wind sample to the control unit;

The wind turbine orientation detecting device is used for detecting a wind turbine orientation and sending the wind turbine orientation to the control unit;

The control unit is used for judging whether an intersection angle between the first wind direction and the wind turbine orientation is smaller than a critical angle of rotation. If the answer is "yes", determining the windward condition is unnecessary windward condition; if the answer is "no", informing the wind sampling-detecting unit to detect the wind speed of the first wind sample; judging whether the wind speed of the first wind sample sent by the wind sampling-detecting unit is lower than a first critical wind speed. If the answer is "yes", determining the windward condition is unnecessary windward condition; if the answer is "no", determining the windward condition is not unnecessary windward condition, then rotating the cabin of the wind power generating set, thereby achieving accurate windward according to a wind condition, a cabin position, and so on.

The advantageous results of the present invention are: in the present invention, after taking a first wind sample and obtaining a first wind direction, judging whether an intersection angle between the first wind direction and a wind turbine orientation is smaller than a critical angle of rotation. If the answer is "yes", it indicates that the difference between the first wind direction and the wind turbine orientation is very small; therefore the windward condition is unnecessary windward condition. Detecting a wind speed of the first wind sample, and judging whether the wind speed is lower than a first critical wind speed. If the answer is "yes", it indicates that although the wind direction changes, the wind speed is very small, and the windward condition is unnecessary windward condition. If the intersection angle between the first wind direction and the wind turbine orientation is larger than or equal to the critical angle of rotation, and the wind speed of the first wind is higher than or equal to the first critical wind speed, then it indicates that the windward condition is not unnecessary windward condition. Therefore, the present invention can judge whether the change of the wind direction is an unnecessary windward condition.

Based on the technical solution described above, the present invention also proposes a method for tracking wind, the method comprises:

judging whether a windward condition is unnecessary windward condition;

under the unnecessary windward condition, not rotating the cabin; under the windward condition that is not unnecessary windward condition, determining different wind-tracking phases according to an intersection angle between a current wind direction and a current wind turbine orientation, a wind speed, and so on, and rotating a cabin;

wherein judging whether a windward condition is unnecessary windward condition further comprises:

Step 1: taking a first wind sample, detecting a wind direction of the first wind sample, and obtaining a first wind direction;

Step 2: judging whether an intersection angle between the first wind direction and the current wind turbine orientation is smaller than a critical angle of rotation;

Step 3: if the judging result of Step 2 is "yes", carrying out Step 3-1; if the judging result of Step 2 is "no", carrying out Step 3-2;

Step 3-1: determining the windward condition is unnecessary windward condition;

Step 3-2: detecting a wind speed of the first wind sample, judging whether the wind speed of the first wind sample is lower than a first critical wind speed; if the answer is "yes", determining the windward condition is unnecessary windward condition; if the answer is "no", determining the windward condition is not unnecessary windward condition, then rotating the cabin of the wind power generating set, thereby achieving accurate windward according to a wind condition, a cabin position, and so on.

Furthermore, the present invention also proposes a system for tracking wind, the system comprises: a wind sampling-detecting device, a wind turbine orientation detecting device, a control device and a cabin rotation device, wherein:

The wind sampling-detecting device is used for taking a first wind sample, detecting a wind direction of the first wind sample, obtaining a first wind direction, and sending the first wind direction to the control device; detecting a wind speed of the first wind sample, and sending the wind speed of the first wind sample to the control device;

The wind turbine orientation detecting device is used for detecting a wind turbine orientation and sending the wind turbine orientation to the control device;

The control device is used for judging whether an intersection angle between the first wind direction and the wind turbine orientation is smaller than a critical angle of rotation. If the answer is "yes", determining the windward condition is unnecessary windward condition; if the answer is "no", informing the wind sampling-detecting device to detect the wind speed of the first wind sample; judging whether the wind speed of the first wind sample sent by the wind sampling-detecting device is lower than a first critical wind speed. If the answer is "yes", determining the windward condition is unnecessary windward condition; if the answer is "no", determining the windward condition is not unnecessary windward condition; under the windward condition that is not unnecessary windward condition, the system for tracking wind sending a cabin rotation order to the cabin rotation device, tracking windward by phasing a small angle tracking strategy and a large angle tracking strategy (wherein the small angle indicates that the intersection angle between the first wind direction and the current wind turbine orientation is relative small, e.g., it can be any angle in the range from 0 degree to 20 degree, the large angle indicates that the intersection angle between the first wind direction and the current wind turbine orientation is relative large, e.g., it can be any angle in the range from 20 degree to 360 degree, the small angle tracking strategy and the large angle tracking strategy respectively use different optimum speed parameters), and capturing the maximum wind energy under the condition of ensuring a stable performance of the wind power generating set;

The cabin rotation device is used for rotating the cabin according to the cabin rotation order sent by the control device.

The advantageous results of adopting the further solution described above are: the solution uses the method and apparatus for judging whether the windward condition is unnecessary windward condition described above; after finishing the judgment that whether the windward condition is unnecessary windward condition, rotating the cabin only under the windward condition that is not unnecessary windward condition. Not rotating the cabin under the windward condition that is unnecessary windward condition. In this way, it can increase the capture rate of wind energy, effectively reduce unnecessary cabin rotation, save electric power and reduce the abrasion of the mechanical units, such as yaw bearing, and so on.

### BRIEF DESCRIPTION OF THE DRAWINGS

Figure 1 is a structural diagram of a wind power generating set.

Figure 2 is a flow diagram of the prior method for tracking wind.

Figure 3 is a flow diagram of a method for judging an unnecessary windward condition according to an embodiment of the present invention.

Figure 4 is a structural diagram of an apparatus for judging an unnecessary windward condition according to an embodiment of the present invention.

Figure 5 is a structural diagram of a system for tracking wind according to an embodiment of the present invention.

Figure 6 is a structural diagram of one embodiment of the system for tracking wind proposed by the present invention.

### DETAILED DESCRIPTION

With the combination of the following figures, the principle and characteristics of the present invention are described. The examples is only used for explaining the present invention and not used for limiting the scope of the present invention.

Figure 3 is a flow diagram of a method for judging an unnecessary windward condition according to an embodiment of the present invention. As shown in Figure 3, the method comprises:

Step 301: taking a first wind sample by using a wind sampling-detecting unit, detecting a wind direction of the first wind sample, and obtaining a first wind direction.

Here, the first wind sample can be a sample obtained by taking a wind sample once. The first wind sample also can be an average sample obtained by taking wind samples many times in a period of time, e.g., wind samples can be taken from any one of the times in the range from the first time to the fifteenth time. If the first wind sample is a sample obtained by taking wind samples more than two times in a period of time, then it needs to make a processing of compensating, filtering, and averaging to a wind direction signal of each obtained wind sample, so that an obtained first wind direction is nearest to the average wind direction within this period of time, wherein the processing of compensating and filtering is used for compensating and filtering the wind direction signal of each wind sample, so that the wind direction signal of each wind sample is nearest to the actual wind direction when obtaining the wind sample. While the process of averaging is used for averaging wind direction signals of a plurality of wind samples obtained in a period of time, so that the first wind direction is nearest to the average wind direction within this period of time.

The first wind direction detected is used for comparing with a wind turbine orientation, thereby judging whether the wind direction is changed.

Step 302: judging whether an intersection angle between the first wind direction and a current wind turbine orientation obtained by a wind turbine orientation device is smaller than a critical angle of rotation by using a control unit.

If the judging result of step 302 is "yes", then carrying out step 303; if the judging result of step 302 is "no", then carrying out steps 304 and 305 successively.

Here, if the intersection angle between the direction of first wind and the wind turbine orientation is smaller than a critical angle of rotation, then it indicates that the wind direction does not change or changes slightly, and the windward condition is unnecessary windward condition; otherwise, if the intersection angle between the first wind direction and the wind turbine orientation is larger or equal to the critical angle of rotation, then it indicates that the change of the wind direction is relatively large, and the windward condition may not be unnecessary windward condition. Therefore, the further judgment is required.

Step 303: determining the windward condition is unnecessary windward condition;

Step 304: detecting a wind speed of the first wind sample;

Here, if the first wind sample is a result of a process of averaging for a plurality of wind samples obtained in a period of time, then according to this step, detecting the wind speed of the first wind sample needs to process compensating, rolling filtering, and averaging to the detected wind speed in each wind sample, wherein the objective of processing the compensating is to compensate the influence on the wind speed of the wind sample caused by the tail current of the wind power generating set, the objective of processing the rolling filtering is to enable the wind speed of each wind sample to be nearest to the actual wind speed when obtaining the wind samples, processing the averaging is to average the wind speed of all the obtained wind samples, thereby obtaining the wind speed of the first wind sample. The objective of processing the averaging is to enable the wind speed of the first obtained wind sample to be nearest to the average wind speed within this period of time.

Step 305: judging whether the wind speed of the first wind sample is lower than a critical wind speed. If the answer is "yes", carrying out step 303; if the answer is "no", carrying out step 306.

Here, the intersection angle between the first wind direction and the wind turbine orientation has been larger than or equal to the critical angle of rotation. If the wind speed of the first wind sample is lower than the critical wind speed, it indicates that although the wind direction changes greatly, the wind speed is very small, and the windward condition is unnecessary windward condition. If the wind speed of the first wind sample is higher than or equal to the critical wind speed, it indicates that under the condition that the wind direction changes relatively greatly, the wind speed of the first wind sample is also high enough. Therefore, this condition does not belong to an unnecessary windward condition.

Step 306: determining the windward condition is not unnecessary windward condition.

In this method, when the wind direction of the first wind sample is detected in step 301, the wind speed also can be detected at the same time. In this way, the speed of response to the change of wind direction can be increased.

Here, the critical angle of rotation in step 302 is generally small, e.g., it can be any angle in the range from 0 degree to 12 degree. Preferably, the critical angle of rotation is an angle of 12 degree. Of course, it also can be other angle degree.

In the step 305, the first critical wind speed indicates a minimum wind speed which can drive the blades of the wind power generating set to rotate and further drive the wind power generator to generate electricity. The first critical wind speed also can indicate a minimum wind speed that can enable the generated electricity to exactly meet the operation requirement of the wind generating set, such as finishing the action of the cabin rotation and so on. The first critical wind speed can be any speed in the range from 0 meter/second to 2.4 meter/second. Preferably, the first critical wind speed can be a speed of 2.4 meter/second. Of course, as different wind power generating set have different first critical angles of rotation, the critical wind speed in the step 305 can also be other speed.

The present invention also proposes a method for tracking wind, the method comprises:

judging whether a windward condition is unnecessary windward condition;

under the unnecessary windward condition, not rotating the cabin; under the unnecessary windward condition that is not unnecessary windward condition, the control unit determining different wind-tracking phases according to an intersection angle between a current wind direction and a current wind turbine orientation, a wind speed, and so on, and rotating the cabin;

wherein, the method for judging whether a windward condition is unnecessary windward condition is the method for judging an unnecessary windward condition shown in Figure 3, the method comprises the following steps:

Step 301: taking a first wind sample by using a wind sampling-detecting unit, detecting a wind direction of the first wind sample, and obtaining a first wind direction;

Step 302: judging whether an intersection angle between the first wind direction and a current wind turbine orientation obtained by a wind turbine orientation device is smaller than a critical angle of rotation by using a control unit;

Step 303: determining the windward condition is unnecessary windward condition;

Step 304: detecting a wind speed of the first wind sample;

Step 305: judging whether the wind speed of the first wind sample is lower than a critical wind speed. If the answer is "yes", carrying out step 303; if the answer is "no", carrying out step 306;

Step 306: determining the windward condition is not unnecessary windward condition.

Here, after judging whether the windward condition is unnecessary windward condition with the method for judging the unnecessary windward condition shown in Figure 3, rotating the cabin only under the windward condition that is not unnecessary windward condition. Not rotating the cabin under the windward condition that is unnecessary windward condition. In this way, it can effectively reduce unnecessary cabin rotation, save electric power and reduce the abrasion of the mechanical units, such as yaw bearing, and so on.

In the method for tracking wind proposed by the present invention, the method for rotating the cabin can be: the system for tracking wind dividing the windward process into a small angle tracking phase and a large angle tracking phase according to the intersection angle between the first wind direction and the current wind turbine orientation obtained by a wind turbine orientation device (wherein the small angle indicates that the intersection angle between the first wind direction and the current wind turbine orientation is relative small, e.g., it can be any angle in the range from 0 degree to 20 degree, the large angle indicates that the intersection angle between the first wind direction and the current wind turbine orientation is relative large, e.g., it can be any angle in the range from 20 degree to 360 degree, the small angle tracking strategy and the large angle tracking strategy respectively use different optimum speed parameters), configuring different optimum parameters in different phases, enabling the wind power generating set to capture the maximum wind energy and ensure a stable performance of the wind power generating set; rotating the cabin to enable the intersection angle between the wind turbine orientation and the first wind direction to be 180 degree. Of course, the 180 degree here indicates a value in the range from 0 degree to 360 degree. Its objective is to enable the wind turbine orientation to change to a direction opposed to the first wind direction.

In the method for tracking wind according to an embodiment of the present invention, the speed of rotating the cabin is predetermined and also can be controlled by programs. Of course, the speed of rotating the cabin also can be determined by other methods, such as producing the speed of rotating the cabin by fuzzy control. The speed can be a speed of any value, e.g., it can be any speed in the range from 0 degree/minute to 19 degree/minute. Considering the rotating moment of inertia and loads of the wind generating set, a preferred speed value can be 19 degree/minute. In this way, the method for rotating the cabin is: rotating the cabin at the speed of 19 degree/minute. Of course, the speed can also be other value. In addition, the direction of the speed also can be determined by any methods, such as a predetermined method, a program-determined method, or a fuzzy control method and so on. For example, the direction of the speed can be determined to be a clockwise direction or an anticlockwise direction, or a direction that can enable the intersection angle between the wind direction and the wind turbine orientation to decrease, or a direction that can enable the intersection between the wind direction and the wind turbine orientation to increase, and so on.

In the method according to an embodiment of the present invention for judging whether the windward condition is unnecessary windward condition, after determining the wind speed of the first wind sample is higher than the first critical wind speed, the method further comprises: judging whether the wind speed of the first wind sample is higher than a second critical wind speed. If the answer is "yes", rotating the cabin to enable the wind turbine orientation to be perpendicular to the first wind direction. At this time, the wind power generating set enters into an automatic protection program, thereby guaranteeing its own safety in strong wind.

After determining the wind speed of the first wind sample is higher than the first critical wind speed, the wind speed can be regarded to be high enough for generating electricity. Here, further judging whether the wind speed of the first wind sample is higher than the second critical wind speed. If the answer is "yes", it indicates that the wind speed is too high that it may damage the wind power generating set. Therefore, under this condition, the wind power generating set enters into the automatic protection program of rotating the cabin to enable the wind turbine orientation to be perpendicular to the first wind direction. In this way, the wind power generating set can keep away from the energy of strong wind to the greatest extent and prevent itself from being damaged by the strong wind. If the wind speed of the first wind sample is lower than the second critical wind speed, it indicates that the windward condition is not unnecessary windward condition and the wind is not particularly strong, which is appropriate for wind power generation.

Here, the second critical wind speed can be any speed higher than the first critical wind speed. For example, the second critical wind speed can be any speed in the range from 20 meter/second to 25 meter/second. Preferably, the second critical wind speed is a speed of 25 meter/second. Of course, as different wind power generating sets can resist different maximum wind speeds, thus the second critical wind speed also can be other speed, such as a speed of 20 meter/second.

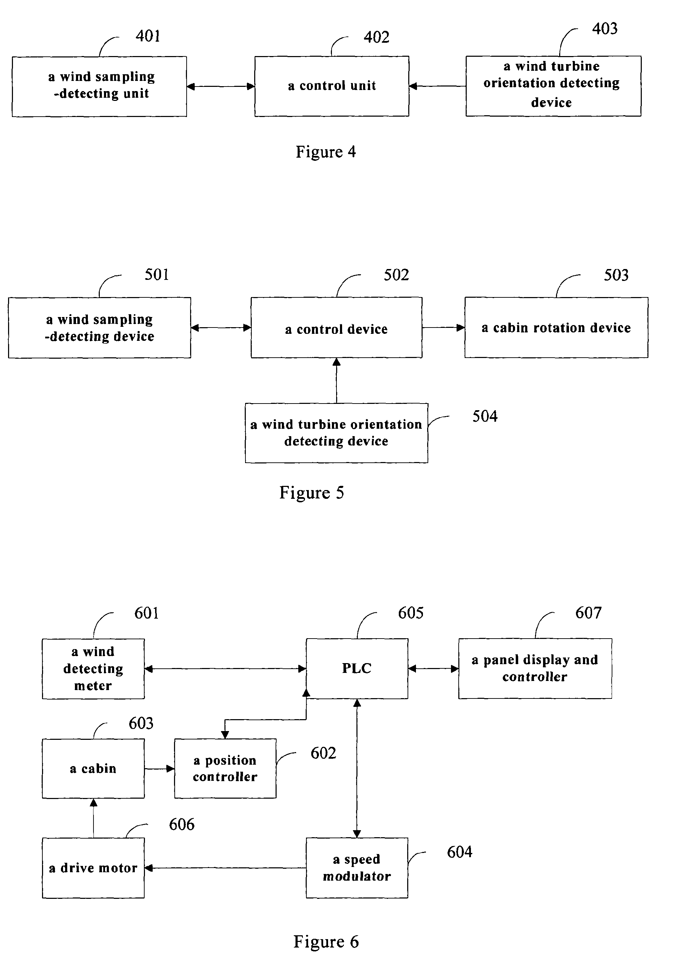

Figure 4 is a structural diagram of an apparatus for judging whether the windward condition is unnecessary windward condition according to an embodiment of the present invention. As shown in Figure 4, the apparatus comprises a wind sampling-detecting unit 401, a control unit 402 and a wind turbine orientation detecting device 403, wherein:

the wind sampling-detecting unit 401 is used for taking a first wind sample, detecting the wind direction of the first wind sample, obtaining a first wind direction, and sending the first wind direction to the control unit 402; detecting a wind speed of the first wind sample and sending the wind speed of the first wind sample to the control unit 402;

The wind turbine orientation detecting device 403 is used for detecting a wind turbine orientation and sending the wind turbine orientation to the control unit 402;

The control unit 402 is used for judging whether an intersection angle between the first wind direction and the wind turbine orientation is smaller than a critical angle of rotation. If the answer is "yes", determining the windward condition is unnecessary windward condition; if the answer is "no", informing the wind sampling-detecting unit 401 to detect the wind speed of the first wind sample. The control unit 402 is also used for judging whether the wind speed of the first wind sample sent by wind sampling-detecting unit 401 is lower than the first critical wind speed. If the answer is "yes", determining the windward condition is unnecessary windward condition; if the answer is "no", determining the windward condition is not unnecessary windward condition, then rotating the cabin of the wind power generating set, thereby achieving accurate windward according to a wind condition, a cabin position, and so on.

The critical angle of rotation is generally very small. For example, the critical angle of rotation can be any angle in the range from 0 degree to 12 degree. Preferably, it is an angle of 12 degree. Of course, it also can be other angel degree.

The first critical wind speed indicates a minimum wind speed which can drive the blades of the wind power generating set to rotate and further drive the wind power generator to generate electricity. The first critical wind speed also can indicate a minimum wind speed that can enable the generated electricity to exactly meet the operation requirement of the wind generating set, such as finishing the action of the cabin rotation and so on. The first critical wind speed can be any speed in the range from 0 meter/second to 2.4 meter/second. Preferably, the first critical wind speed can be a speed of 2.4 meter/second. Of course, as different wind power generating set have different first critical angles of rotation, the first critical wind speed can be other speed besides the speed of 2.4 meter/second.

Figure 5 is a structural diagram of a system for tracking wind according to an embodiment of the present invention. As shown in Figure 5, the system comprises a wind sampling-detecting device 501, a control device 502, a cabin rotation device 503 and a wind turbine orientation detecting device 504, wherein:

The wind sampling-detecting device 501 is used for taking a first wind sample, detecting the wind direction of the first wind sample, obtaining a first wind direction, and sending the first wind direction to the control device 502; detecting a wind speed of the first wind sample and sending the wind speed of the first wind sample to the control device 502;

The wind turbine orientation detecting device 504 is used for detecting a wind turbine orientation and sending the wind turbine orientation to the control device 502;

The control device 502 is used for judging whether an intersection angle between the first wind direction and a current wind turbine orientation obtained by a wind turbine orientation device is smaller than a critical angle of rotation; if the answer is "yes", the windward condition is unnecessary windward condition; if the answer is "no", informing the wind sampling-detecting device 501 to detect the wind speed of the first wind sample; judging whether the wind speed of the first wind sample sent by the wind sampling-detecting device 501 is lower than the first critical wind speed, if the answer is "yes", determining the windward condition is unnecessary windward condition; if the answer is "no", determining the windward condition is not unnecessary windward condition; under the windward condition that is not unnecessary windward condition, sending a cabin rotation order to the cabin rotation device 503;

The cabin rotation device 503 is used for rotating the cabin according to the cabin rotation order sent by the control device 502.

In an embodiment of the present invention, the cabin rotation device 503 is used for rotating the cabin at any speed in the range of from 0 degree/minute to 19 degree/minute according to the rotation order of the cabin sent by the control device 502 and enabling the intersection angle between the wind turbine orientation and the first wind direction to be 180 degree.

Of course, the 180 degree here indicates a value in the range from 0 degree to 360 degree. Its objective is to enable the wind turbine orientation to change to a direction opposed to the first wind direction.

In the device, the speed of rotating the cabin by the cabin rotation device 503 is predetermined and also can be controlled by programs. Of course, the speed of rotating the cabin also can be determined by other methods, such as producing the speed of rotating the cabin by fuzzy control. The speed can be a speed of any value, e.g. it can be any speed in the range from 0 degree/minute to 19 degree/minute. Preferably, the speed can be 19 degree/minute. Of course, the speed can also be other value. In addition, the direction of the speed also can be determined by any methods, such as a predetermined method, a program-determined method, or a fuzzy control method and so on. For example, the direction of the speed can be determined to be a clockwise direction or an anticlockwise direction, or a direction that can enable the intersection angle between the wind direction and the wind turbine orientation to decrease, or a direction that can enable the intersection between the wind direction and the wind turbine orientation to increase, and so on.

In an embodiment of the present invention, the wind turbine orientation detecting device comprises an incremental encoder used for detecting the wind turbine orientation. In practice, the absolute encoder is very expensive and when it is applied in the wind turbine orientation detecting device, a special module is needed to be configured in the control device 502 to receive the signals produced by the absolute encoder. For example, in one embodiment of a system used for tracking wind, a wind turbine orientation detecting device is configured with an absolute encoder. The communication protocol adopted by the encoder is SSI protocol. Therefore, in order to match the protocol, the control device 502 is needed to be configured with a special communication interface module. Furthermore, when adopting different control devices 502, the configured communication interface modules are also different. It may influence the generality of the system and also increase the cost of developing and using the system.

Compared with the absolute encoder, the incremental encoder is less expensive. Furthermore, the incremental encoder just needs to use two ways of high-speed pulses whose phase difference is 90 degree to calculate the current wind turbine orientation. In one embodiment of the present invention, Programmable Logic Controller (PLC) is adopted by the control device 502. Therefore, after the two ways of the high-speed pulses produced by the incremental encoder are sent to PLC, it is no need for PLC to be configured with a special interface module. The two ways of the high-speed pulses can be processed only through their own program processing algorithm, so that accurate data on the wind turbine orientation is obtained. Therefore, compared with the absolute encoder, the incremental encoder used in the wind turbine orientation detecting device has the advantages of low cost and better generality.

In addition, the accuracy of the incremental encoder and the accuracy of the absolute encoder adopted in the wind turbine orientation detecting device are much the same. Both can reach over 0.03506.

The control device 502 is further used for judging whether the wind speed of the first wind sample is higher than a second critical wind speed; if the answer is "yes", sending a cabin avoiding order to the cabin rotation device 503; wherein the second critical wind speed is any speed in the range from 20 meter/second to 25 meter/second.

The cabin rotation device 503 is further used for rotating the cabin according to the cabin avoiding order sent by the control device 502 and enabling the wind turbine orientation to be perpendicular to the first wind direction.

Here, the second critical wind speed is a maximum wind speed which the wind power generating set can stand. If the wind speed exceeds the second critical wind speed, the wind speed is so high that it may damage the wind power generating set. Therefore, in the present invention, the control device 502 orders the cabin rotation device 503 to rotate the cabin to enable the wind turbine orientation to be perpendicular to the first wind direction, thereby enabling the wind power generating set to enter into a self-protection program, and reducing the damage to the wind power generating set caused by the strong wind to the greatest extent.

Since different wind power generating sets can stand different maximum wind speeds, the second critical wind speeds are also different. For example, the second critical wind speed can be any speed in the range from 20 meter/second to 25 meter/second. In one embodiment of the present invention, the second critical wind speed is a speed of 25 meter/second. Of course, in other embodiments of the present invention, the second critical wind speed can also be other speed, such as a speed of 20 meter/second.

The system for tracking wind according to an embodiment of the present invention further comprises a power detecting unit, a rotation speed detecting unit and a failure judging unit, wherein:

the power detecting unit is used for detecting an output power of the cabin rotation device 503 when the cabin is rotated by the cabin rotation device 503 and sending the output power of the cabin rotation device 503 to the failure judging unit;

The rotation speed detecting unit is used for detecting the rotation speed of the cabin when the cabin is rotated by the cabin rotation device 503 and sending the rotation speed of the cabin to the failure judging unit;

The failure judging unit is used for judging whether the output power of the cabin rotation device 503 exceeds a critical power. If the answer is "yes", sending a power failure signal. The failure judging unit is also used for judging whether the rotation speed of the cabin is lower than a critical rotation speed. If the answer is "yes", sending a rotation speed failure signal

In the system for tracking wind according to an embodiment of the present invention, detecting the output power of the cabin rotation device 503 and the rotation speed of the cabin by configuring the power detecting unit, the rotation detecting unit and the failure judging unit when the cabin is rotated by the cabin rotation device 503, and then judging whether the output power exceeds the critical power and whether the rotation speed is lower than the critical rotation speed by the cabin failure device. If the answer is "yes", it indicates that there exists a resistance force exceeding the critical value in the rotation. It is an unusual condition that there exists such resistance force. Therefore, it should give an alarm and wait for a repair for the unusual condition. Meanwhile, as the load of the bearing of the wind power generating set and the vibration and noise of the system for tracking wind are accounted in the configuration of the critical power and the critical rotation speed, the system for tracking wind proposed in the present invention further comprises the power detecting unit, the rotation speed detecting unit and the failure judging unit, which can reduce the influence caused by the vibration and noise of the wind power generating set.

The system for tracking wind according to an embodiment of the present invention also can further comprise a temperature detecting unit and a failure judging unit, wherein:

The temperature detecting unit is used for detecting the temperature of the cabin rotation device 503 and sending the temperature of the cabin rotation device 503 to the failure judging unit;

The failure judging unit is used for judging whether the temperature of the cabin rotation device 503 exceeds a critical temperature. If the answer is "yes", sending a high-temperature failure signal.

In the system for tracking wind according to an embodiment of the present invention, judging whether the temperature of the cabin rotation device 503 exceeds the critical temperature by the configuration of the temperature detecting unit and the failure judging unit. If the answer is "yes", it indicates that there exists a failure. Therefore, it should give an alarm and wait for a repair for the failure.

Figure 6 is a structural diagram of one embodiment of a system for tracking wind proposed in the present invention. In Figure 6, the system for tracking wind in the embodiment comprises a wind detecting meter 601, a position controller 602, a speed modulator 604, a drive motor 606, PLC 605, a panel display and controller 607. In addition, in Figure 6, the system for tracking wind further comprises a cabin 603 of the wind power generating set, wherein:

The wind detecting meter 601 is the wind sampling-detecting unit described above, which can be used for detecting a wind direction and a wind speed of a first wind sample. PLC 605 is the control unit described above, which is used for judging whether the windward condition is unnecessary windward condition according to the wind direction and the wind speed of the first wind sample detected by the wind detecting meter 601. Under the windward condition that is not unnecessary windward condition, a cabin rotation order is sent to the speed modulator 604.

The rotation device described above is constituted of the speed modulator 604 and the drive motor 606. The speed modulator 604 is used for controlling the drive motor 606 to rotate the cabin 603 according to the cabin rotation order sent by the PLC 605. The drive motor 606 is used for rotating the cabin 603 under the control of the speed modulator 604.

The position controller 602 is the wind turbine orientation device, which is used for detecting the wind turbine orientation. The encoder in the position controller 602 is an incremental encoder;

The panel display and controller 607 is a human-computer interface, which can be used for displaying the wind direction and the wind speed detected by the wind detecting meter 601, the wind turbine orientation detected by the position controller 602 and the unnecessary windward condition judged by PLC605, and the cabin rotation order being sent, and so on. The panel display and controller 607 also can be used for receiving an outside control signal and then controlling the operation of the speed modulator 604, and so on.

The workflow of the system for tracking wind shown in Figure 6 is as follows:

taking a first wind sample by the wind detecting meter 601, detecting a wind direction and a wind speed of the first wind sample, obtaining a first wind direction and a wind speed of the first wind sample, sending the first wind direction and the wind speed of the first wind sample to PLC 605;

judging whether an absolute value of an intersection angle between the first wind direction and a wind turbine orientation is less than 12 degree by PLC605, i.e. judging whether the intersection angle between the first wind direction and the wind turbine orientation is less than positive 12 degree or negative 12 degree; if the answer is "yes", determining the windward condition is unnecessary windward condition; if the answer is "no", judging whether the wind speed is less 2.4 meter/second by PLC605; if the answer is "yes", determining the windward condition is unnecessary windward condition; if the answer is "no", determining the windward condition is not unnecessary windward condition.

If PLC605 judges the change of the direction of the current wind is not the unnecessary windward condition, then PLC605 informs the position controller 602 to detect the wind turbine orientation. After obtaining the wind turbine orientation detected by the position controller 602, the wind turbine orientation is sent to PLC605. PLC605 calculates the intersection angle between the wind turbine orientation and the first wind direction and sends a cabin rotation order to the speed modulator 604 according to the intersection angle. The speed modulator 604 controls the drive motor 606 to rotate the cabin 603 at the speed of 19 degree/second according to the cabin rotation order, which enables the intersection angle between the wind turbine orientation and the first wind direction to be 180 degree.

In addition, if the wind speed of the first wind sample detected by the wind detecting meter 601 is higher than 25 meter/second, the cabin avoiding order is sent to the speed modulator 604 by the PLC605. The speed modulator 604 controls the drive motor 606 to rotate the cabin 603 according to the cabin avoiding order sent by the PLC605, which enables the wind turbine orientation to be perpendicular to the first wind direction.

Therefore, the present invention has the following advantages:

(1) In the present invention, after the first wind sample is obtained and the wind direction of the first wind sample (i.e. the first wind direction) is detected, whether the intersection angle between the first wind direction and the wind turbine orientation is less than the critical angle of the rotation is judged. If the answer is "yes", it indicates that the difference between the first wind direction and the wind turbine orientation is very small and the windward condition is unnecessary windward condition; if the answer is "no", the wind speed of the first wind sample is detected, and whether the wind speed is lower than the first critical wind speed is judged. If the answer is "yes", it indicates that although the wind direction changes, the wind speed is very low, and the windward condition is unnecessary windward condition. If the intersection angle between the first wind direction and the wind turbine orientation is larger than or equal to the critical angle of rotation and the wind speed is also higher than or equal to the first critical wind speed, it indicates that the windward condition is not unnecessary windward condition. Therefore, whether the change of the wind direction is an unnecessary windward condition can be judged by the present invention.

(2) In the present invention, the cabin is rotated only under the windward condition that is not unnecessary windward condition. The cabin is not rotated under the windward condition that is unnecessary windward condition. In this way, it can effectively reduce unnecessary cabin rotation, save electric power and reduce the abrasion of the mechanical units, such as yaw bearing, and so on.

(3) In the present invention, after obtaining a plurality of wind samples, it needs to conduct a process of compensating, filtering, and averaging to the speed and direction of each wind sample to obtain a first wind direction and a wind speed of a first wind sample. Therefore, the data of the wind direction and wind speed obtained in the present invention is nearest to the actual value of the wind direction and the wind speed in the current period of time. This further optimizes the solution of judging the unnecessary windward condition and makes the judging result more accurate. With the solution of the present invention, the real-time and efficiency of the tracked wind direction are far higher than those of the prior art and the power generating efficiency of the wind power generating set of the method is also higher.

(4) In the present invention, as the power detecting unit, the rotation detecting unit and the failure judging unit are configured, when the output power of the cabin rotation device exceeds the critical power or when the rotation speed of the cabin is lower than the critical rotation speed, the failure judging unit can give an alarm and wait for a repair. Therefore, the present invention can eliminate the problems of the device for tracking wind in the prior art that the output power of the cabin is too large or too small or the rotation speed is too low, which are caused by the too large or too small rotation moment. Meanwhile, the present invention also can reduce the influence caused by the vibration and noise of the wind power generating set.

(5) In the present invention, as the temperature detecting unit and the failure judging unit are configured, the failure judging unit can give an alarm and wait for a repair when the temperature detecting unit detects that the temperature on a certain position of the drive device exceeds the critical temperature i.e., when the temperature on a certain driving point in the cabin rotation device exceeds the critical temperature. Therefore, the present invention has a high safety and the situation that the cabin rotation device of the wind power generating set is burn out because a certain driving point overheats will not happen, thereby guaranteeing the reliability of the wind power generating set in the process of tracking wind.

(6) The present invention provides two selection solutions of the encoder in the wind turbine orientation detecting device. The detecting accuracy of two solutions is similar. However, the incremental encoder solution that adopts a combination of the hardware and PLC control program can save the design cost and improve economic benefits under the condition of guaranteeing the control accuracy of the wind power generating set.

The embodiments described above are merely preferred embodiments of the present invention and they do not limit the present invention. Any revision, equal replacement and development within the spirit and principle of the present invention are included in the protection scope of the present invention.

## Claims

1. A method for judging an unnecessary windward condition in wind power generation, the method comprising:
Step 1: taking a first wind sample, detecting a wind direction of the first wind sample, and obtaining a first wind direction;
Step 2: judging whether an intersection angle between the first wind direction and a current wind turbine orientation is smaller than a critical angle of rotation;
Step 3: if the judging result of Step 2 is "yes", carrying out Step 3-1; if the judging result of Step 2 is "no", carrying out Step 3-2;
Step 3-1: determining the windward condition is unnecessary windward condition;
Step 3-2: detecting a wind speed of the first wind sample, judging whether the wind speed of the first wind sample is lower than a first critical wind speed; if the answer is "yes", determining the windward condition is unnecessary windward condition; if the answer is "no", determining the windward condition is not unnecessary windward condition, then rotating the cabin of the wind power generating set, thereby achieving accurate windward according to a wind condition, a cabin position, and so on.

2. The method in accordance with Claim 1, wherein the critical angle of rotation is an angle in the range from 0 degree to 12 degree.

3. The method in accordance with Claim 1 or 2, wherein the critical wind speed is a speed in the range from 0 meter/second to 2.4 meter/second.

4. A method for tracking wind in wind power generation, the method comprising:
judging whether a windward condition is unnecessary windward condition;
not rotating a cabin under an unnecessary windward condition; and
under the windward condition that is not unnecessary windward condition, the control unit determining different wind-tracking phases according to an intersection angle between a current wind direction and the cabin, the wind speed, and so on, and rotating the cabin;
wherein judging whether a windward condition is unnecessary windward condition further comprises:
Step 1: taking a first wind sample, detecting a wind direction of the first wind sample, and obtaining a first wind direction;
Step 2: judging whether an intersection angle between the first wind direction and a current wind turbine orientation is smaller than a critical angle of rotation;
Step 3: if the judging result of Step 2 is "yes", carrying out Step 3-1; if the judging result of Step 2 is "no", carrying out Step 3-2;
Step 3-1: determining the windward condition is unnecessary windward condition;
Step 3-2: detecting a wind speed of the first wind sample, judging whether the wind speed of the first wind sample is lower than a first critical wind speed; if the answer is "yes", determining the windward condition is unnecessary windward condition; if the answer is "no", determining the windward condition is not unnecessary windward condition, then rotating the cabin of the wind power generating set, thereby achieving accurate windward according to a wind condition, a cabin position, and so on;
if determining the windward condition is not unnecessary windward condition, tracking windward by phasing a small angle tracking strategy and a large angle tracking strategy, and capturing the maximum wind energy under the condition of ensuring a stable performance of the wind power generating set.

5. An apparatus for judging an unnecessary windward condition in wind power generation, the apparatus comprising:
a wind sampling-detecting unit;
a wind turbine orientation detecting device; and
a control unit; wherein
the wind sampling-detecting unit is used for taking a first wind sample, detecting a wind direction of the first wind sample, obtaining a first wind direction, and sending the first wind direction to the control unit; detecting a wind speed of the first wind sample and sending the wind speed of the first wind sample to the control unit;
the wind turbine orientation detecting device is used for detecting an orientation of a wind turbine and sending the wind turbine orientation to the control unit;
the control unit is used for judging whether an intersection angle between the first wind direction and the wind turbine orientation is smaller than a critical angle of rotation; if the answer is "yes", determining the windward condition is unnecessary windward condition; if the answer is "no", informing the wind sampling-detecting unit to detect the wind speed of the first wind sample; judging whether the wind speed of the first wind sample sent by the wind sampling-detecting unit is lower than the first critical wind speed; if the answer is "yes", determining the windward condition is unnecessary windward condition; if the answer is "no", determining the windward condition is not unnecessary windward condition, then rotating the cabin of the wind power generating set, thereby achieving accurate windward according to a wind condition, a cabin position, and so on.

6. A system for tracking wind in wind power generation, the system comprising:
a wind sampling-detecting device;
a wind turbine orientation device;
a control device; and
a cabin rotation device; wherein
the wind sampling-detecting device is used for taking a first wind sample, detecting a wind direction of the first wind sample, obtaining a first wind direction, and sending the first wind direction to the control device; detecting a wind speed of the first wind sample and sending the wind speed of the first wind sample to the control unit;
the wind turbine orientation detecting device is used for detecting a wind turbine orientation and sending the wind turbine orientation to the control unit;
the control device is used for judging whether an intersection angle between the first wind direction and the wind turbine orientation is smaller than a critical angle of rotation; if the answer is "yes", determining the windward condition is unnecessary windward condition; if the answer is "no", informing the wind sampling-detecting device to detect the wind speed of the first wind sample; judging whether the wind speed of the first wind sample sent by the wind sampling-detecting device is lower than the first critical wind speed; if the answer is "yes", determining the windward condition is unnecessary windward condition; if the answer is "no", determining the windward condition is not unnecessary windward condition;
the cabin rotation device is used for rotating the cabin according to the rotation order from the cabin sent by the control device.

7. The system in accordance with Claim 6, wherein the cabin rotation device is used for rotating the cabin at a speed in the range from 0 degree/minute to 19 degree/minute according to the cabin rotation order sent by the control unit, so that the intersection angle between the wind turbine orientation and the first wind direction is 180 degree.

8. The system in accordance with Claim 6, wherein the wind turbine orientation detecting device further comprises an incremental encoder used for detecting the wind turbine orientation.

9. The system in accordance with Claim 6, wherein
the control unit is further used for judging whether the wind speed of the first wind sample is higher than that of a second critical wind speed; sending a cabin avoiding order to the cabin rotation device if the answer is "yes"; wherein the second critical wind speed is a speed in the range from 20 meter/second to 25 meter/second;
the cabin rotation device is further used for rotating the cabin according to the cabin avoiding order sent by the control unit and enabling the wind turbine orientation to be perpendicular to the first wind direction.

10. The system in accordance with Claim 6, wherein the system further comprises a power detecting unit, a rotation speed detecting unit and a failure judging unit, wherein
the power detecting unit is used for detecting an output power of the cabin rotation device when the cabin is rotated by the cabin rotation device and sending the output power of the cabin rotation device to the failure judging unit;
the rotation speed detecting unit is used for detecting a rotation speed of the cabin when the cabin is rotated by the cabin rotation device and sending the rotation speed of the cabin to the failure judging unit;
the failure judging unit is used for judging whether the output power of the cabin rotation device exceeds a critical power; sending a power failure signal if the answer is "yes"; judging whether the rotation speed of the cabin is lower than a critical rotation speed; if the answer is "yes", sending a rotation speed failure signal.

11. The system in accordance with Claim 7, wherein the wind turbine orientation detecting device further comprises an incremental encoder used for detecting the wind turbine orientation.

12. The system in accordance with Claim 7, wherein
the control unit is further used for judging whether the wind speed of the first wind sample is higher than that of a second critical wind speed; sending a cabin avoiding order to the cabin rotation device if the answer is "yes"; if the answer is "no", determining the windward condition is unnecessary windward condition, wherein the second critical wind speed is a speed in the range from 20 meter/second to 25 meter/second;
the cabin rotation device is further used for rotating the cabin according to the cabin avoiding order sent by the control unit and enabling the wind turbine orientation to be perpendicular to the first wind direction.

13. The system in accordance with Claim 7, wherein the system further comprises a power detecting unit, a rotation speed detecting unit and a failure judging unit, wherein
the power detecting unit is used for detecting an output power of the cabin rotation device when the cabin is rotated by the cabin rotation device and sending the output power of the cabin rotation device to the failure judging unit;
the rotation speed detecting unit is used for detecting a rotation speed of the cabin when the cabin is rotated by the cabin rotation device and sending the rotation speed of the cabin to the failure judging unit;
the failure judging unit is used for judging whether the output power of the cabin rotation device exceeds a critical power; sending a power failure signal if the answer is "yes"; judging whether the rotation speed of the cabin is lower than a critical rotation speed; if the answer is "yes", sending a rotation speed failure signal.
